# EUROPEAN PATENT APPLICATION

(11) **EP 1 864 697 A1**
(43) Date of publication of application: **12.12.2007**
(21) Application number: 06729774.7
(22) Date of filing: 23.03.2006
(51) Int. Cl.: A63F 13/00, A63F 13/10

(54) **GAME DEVICE, GAME CONTROL METHOD, INFORMATION RECORDING MEDIUM, AND PROGRAM**

(30) Priority: 30.03.2005 JP 2005097511
(71) Applicant: Konami Digital Entertainment Co., Ltd., Minato-ku Tokyo 107-8324 (JP)
(72) Inventor: KIYOMOTO, M., Konami Digital Entertainment Co. Ltd, Tokyo 107-8324 (JP); NAGAYAMA, K., Konami Digital Entertainment Co. Ltd, Tokyo 107-8324 (JP)
(74) Representative: Rüger, Barthelt & Abel Patentanwälte
(86) International application number: PCT/JP2006/305807
(87) International publication number: WO 2006/109486

(57) **Abstract**

In a game device (301) for showing to a player the directions in which movement may be possible in a game where a character is moved between objects in a virtual world, an input receiving unit (305) receives an instruction input for moving a character within the object where the character is located or to another object, an index calculation unit (303) calculates an index indicating the degree to which movement will fail in a case where movement from the object where the character is located to another object is presumed, an image display unit (304) that displays an image associated with the calculated index in a location associated with the direction of the other object, and a character moving unit (306) that moves the character on the object where the character is located, or moves the character to another object, or fails to move the character to another object.

## Description

### Technical Field

The present invention relates to a game device and game control method for showing to a player in an easy-to-understand manner the directions in which movement may be possible in a game wherein a character is moved from one object to another object in a virtual world, and a program for realizing these on a computer.

### Background Art

Heretofore, games wherein a character is moved from one object to another object in a virtual world have been widely proposed. Such movement between objects includes a variety of possibilities, such as moving between floors on an elevator, crossing from one side of a lift bridge to another, moving between locations by grabbing a balloon, or moving between locations by riding a magic carpet, in an action game, shooting game, or role playing game, for example. Then, in the event movement fails, various modes have been provided, including simply not being able to make the move and plunging downward as the game comes to an end. Such a game device related technique has been proposed in the following literature:
Patent Literature 1: Japanese Patent No. 3491754

In this literature, a technique has been proposed for showing to a player in an easy-to-understand manner the objective of the game by automatically changing in part the posture of the character so that the character faces the direction of a target object in a case where the character and the target object are close in distance and predetermined orientation conditions have been met.

### Disclosure of Invention

### Problem to be Solved by the Invention

Nevertheless, there has been a large demand for showing to the player in an easy-to-understand manner the directions in which a character can move, such as, for example, in a case where there is a high degree of freedom with respect to character movement, in a case where an objective is not necessarily set, or in a case where there is a plurality of directions in which the character can be moved.

To show the directions in which movement is possible requires dynamic generation of a layout (generally called a "map") of the objects of the virtual space wherein the character moves, and compatibility also to cases where the map changes with time.

Furthermore, to show the directions in which movement is possible also demands an innovative scheme for skillfully matching the view of the virtual world.

The present invention has been made to overcome such problems, and it is an object of the present invention to provide a game device and game control method for showing to a player in an easy-to-understand manner the directions in which movement may be possible in a game wherein a character is moved from one object to another object in a virtual world, and a program for realizing these on a computer.

### Means for Solving the Problem

To achieve the above objective, the following invention will be disclosed according to the principle of the present invention.

A game device according to a first aspect of the present invention moves a character from the surface of one object to the surface of another object in a virtual world wherein a plurality of objects is arranged and at least one of the plurality of objects moves, and includes an input receiving unit, an index calculation unit, an image display unit, and a character moving unit, which are configured as follows.

That is, the input receiving unit receives an instruction input for moving the character on the surface of the object where the character is presently placed or for moving the character to the surface of another object.

Possible objects where the character may be placed include a floor object of an elevator, a road surface object of a lift bridge, a walkway object such as a hallway or stairwell, a magic carpet object that flies in the air when boarded, a balloon or bird object that flies in the air when grabbed, etc. Items such as an elevator door or door are not classified as "objects" in the present invention. That is, an "object" in the present invention is something for which, in the game, there is an aspect of the character moving along with the arranged "object" or moving to the surface of the "object."

Meanwhile, the index calculation unit calculates an index indicating the degree to which the movement will not fail in a case where existence of an instruction input for moving the character from the surface of the object where the character is presently placed to the surface of another object has been presumed.

For this "index," the probability that the movement will succeed itself may be used, or something simpler may be used. For example, in a case where there is a door on an elevator, movement will always fail until the door opens since the door exists as an obstacle, even if the elevator is near a certain floor and the existence of an instruction input for moving to the corridor of that floor is presumed. In the present invention, however, "degree" may be thought of in simpler terms.

For example, in a case where a character moves from the floor of an elevator to a certain floor, the degree to which the movement will not fail increases as the distance to that floor decreases, etc. In this case, the player can predict the direction in which the elevator door will open before the door opens, making it also possible to set the orientation of the character in that direction in advance and move the character quickly.

Furthermore, the image display unit displays an image associated with the calculated index in a location associated with the direction of the other object.

That is, an image that indicates in which direction the character can proceed is displayed on the screen. Various display methods are conceivable. For example, in a case where a controller that issues movement instructions in eight directions is used, a circle divided into eight sectors is prepared in a corner of the screen, displaying a sector brighter if the possibility for movement to another object that exist in the corresponding direction is high, or darker or transparently if the possibility is low, etc. A display method for matching the display to the game world will be described later.

Meanwhile, the character moving unit moves the character on the surface of the object where the character is presently placed, or moves the character to the surface of another object, or fails to move the character to the surface of another object, based on the received instruction input.

For example, in a case where the character changes orientation or position inside an elevator and the elevator arrives at a certain floor, a mode where the character moves to the corridor, or fails to move and stays in the elevator if the door does not open, or moves but plunges downward causing the game to end if there is no door or floor in that direction, is conceivable.

The present invention makes it possible to show to a player in an easy-to-understand manner the directions in which movement may be possible in a game wherein a character is moved from one object to another object in a virtual world.

Further, a game device of the present invention may be configured to include an estimation unit in place of the index calculation unit, wherein the estimation unit estimates whether or not movement from the surface of the object where the character is presently placed to another object within a predetermined time period from the present will be possible, and the image display unit, in a case where movement has been assessed as possible, displays an image that informs the player that movement will be possible, in a location associated with the direction of the other object.

That is, the present invention employs "whether or not the character can move to another object within a predetermined time period from the present" as an "index for estimating that movement will not fail."

Further, in a game device of the present invention, the image display unit may be configured to combine and display an image associated with the calculated index with the area of a plurality of areas assigned to the edges of the surface of the object where the character is presently placed that is arranged in the direction of the other object.

For example, assume there is an elevator with a rectangular floor and a door on each wall in the four directions. On the edges of the floor of the elevator are established four strip-shaped areas. Then, at the floor where the character is to move next, a light shines, brightening the strip on the side where the door is to open.

The present invention uses the surfaces of objects arranged in a virtual world to show to a player the directions in which a character can move, making it possible for the player to submerge himself/herself in the virtual world and easily grasp the directions in which movement is possible via an intuitive presentation based on object surfaces.

Further, in a game device of the present invention, the index calculation unit is configured to calculate an index indicating the degree to which the movement will not fail from the distance between the object where the character is presently placed and the other object, and the increasing or decreasing trend of this distance.

That is, the embodiment presumes that the possibility that movement will succeed increases as the distance between the object where the character is presently placed and the other object decreases, and increases if this distance exhibits a decreasing trend since this means the other object is drawing near. This is indicated by an increasingly pronounced display as the distance decreases and as the distance decreasing trend becomes more evident.

For example, as the distance decreases, the image associated with that direction appears brighter. Or, the color is changed so that the blueness increases if the distance exhibits an increasing trend, and the redness increases if the distance exhibits a decreasing or holding trend (not much change).

The present invention makes it possible to easily calculate an index that indicates the degree to which the movement will not fail and, if the image is appropriately associated with the index, makes it possible to inform a player in advance of the directions in which movement may be possible.

Further, a game device of the present invention further comprises an object moving unit, wherein the object moving unit is configured to move a first object of the plurality of objects between the vicinity of a second object and the vicinity of a third object in the virtual world.

This presumes a case where, for example, an elevator (the first object) moves vertically between a certain floor (the second object) and another floor (the third object), and therefore the present invention is a preferred embodiment of the above-described invention.

Further, a game device of the present invention further comprises an object moving unit, wherein the object moving unit moves a first object and/or a second object of the plurality of objects so that the first object moves to the vicinity and to locations not in the vicinity of the second object in the virtual world.

This presumes a case where one side (the first object) and the other side (the second object) of a lift bridge and a shelf-like elevator are arranged side by side and, when these are independently moved up and down, a movement is made from a certain shelf to another shelf, and therefore the present invention is a preferred embodiment of the above-described invention.

A game control method according to another aspect of the present invention controls a game device that moves a character from the surface of one object to the surface of another object in a virtual world wherein a plurality of objects is arranged and at least one of the plurality of objects moves, wherein the game device includes an input receiving unit, an index calculation unit, an image display unit, and a character moving unit, and the game control method includes an input receiving step, an index calculation step, an image display step, and a character moving step, which are configured as follows.

That is, in the input receiving step, the input receiving unit receives an instruction input for moving the character on the surface of the object where the character is presently placed or for moving the character to the surface of another object.

Meanwhile, in the index calculation step, the index calculation unit calculates an index indicating the degree to which the movement will not fail in a case where the existence of an instruction input for moving the character from the surface of the object where the character is presently placed to the surface of another object is presumed.

Furthermore, in the image display step, the image display unit displays an image associated with the calculated index in a location associated with the direction of the other object.

Then, in the character moving step, the character moving unit moves the character on the surface of the object where the character is presently placed, or moves the character to the surface of another object, or fails to move the character to the surface of another object, based on the received instruction input.

Further, a game control method of the present invention may be configured to control a game device that includes an estimation unit in place of the index calculation unit and to include an estimation step in place of the index calculation step, wherein in the estimation step the estimation unit estimates whether or not movement from the surface of the object where the character is presently placed to the surface of another object within a predetermined time period from the present will be possible, and in the image display step the image display unit, in a case where movement has been assessed as possible, displays an image that informs the player that movement will be possible, in a location associated with the direction of the other object.

A program according to another aspect of the present invention is configured to control a computer to function as the above-described game device, and to execute the above-described game control method on a computer.

The program of the present invention can be recorded on a computer readable information storage medium, such as a compact disk, a flexible disk, a hard disk, a magneto-optical disk, a digital video disk, a magnetic tape or a semiconductor memory.

The program can be distributed and sold, independently of a computer which executes the program, over a computer communication network. The information storage medium can be distributed and sold, independently of the computer.

### Effect of the Invention

According to the present invention, it is possible to provide a game device and game control method for showing to a player in an easy-to-understand manner the directions in which movement may be possible in a game wherein a character is moved from one object to another object in a virtual world, and a program for realizing these on a computer.

### Brief Description of Drawings

[FIG. 1] An exemplary diagram illustrating the schematic configuration of a typical information processing device on which a game device of the present invention will be realized.
[FIG. 2] An explanatory diagram showing the outer appearance of a controller applicable to a game device of the present invention.
[FIG. 3] An exemplary diagram illustrating the schematic configuration of a game device according to the embodiment.
[FIG. 4] A flowchart showing the flow of control of the game control process.
[FIG. 5] An explanatory diagram showing a display example of an image generated in the embodiment.
[FIG. 6] An explanatory diagram illustrating the overall floor object of an elevator.
[FIG. 7] An explanatory diagram illustrating a state of a case where a plurality of objects move and a plurality of objects are fixed.

### Description of Reference Numerals

- 100: information processing device
- 101: CPU
- 102: ROM
- 103: RAM
- 104: interface
- 105: controller
- 106: external memory
- 107: image processor
- 108: DVD-ROM drive
- 109: NIC
- 110: sound processor
- 201: ↑ button
- 202: ↓ button
- 203: ← button
- 204: → button
- 205: ○ button
- 206: × button
- 207: Δ button
- 208: □ button
- 209: SELECT button
- 210: START button
- 211: ANALOG button
- 212: indicator
- 213: joystick
- 214: joystick
- 215: L1 button
- 216: L2 button
- 217: R1 button
- 218: R2 button
- 301: game device
- 302: object moving unit
- 303: index calculation unit
- 304: image display unit
- 305: input receiving unit
- 306: character moving unit
- 501: screen
- 510: floor
- 511: door
- 512: door
- 513: door
- 521: light emitting area
- 522: light emitting area
- 523: light emitting area
- 524: light emitting area
- 701: object that moves vertically
- 702: object that moves vertically
- 703: object that moves vertically
- 704: object of fixed height
- 705: object of fixed height
- 706: object of fixed height
- 707: object of fixed height
- 708: object of fixed height
- 711: character

### Best Mode for Carrying Out the Invention

An embodiment of the present invention will be described below. While the following describes an embodiment in which the present invention is adapted to a game information processing device for the ease of understanding, the embodiment to be described below is given by way of illustration only, and does not limit the scope of the invention. Therefore, those skilled in the art can employ embodiments in which the individual elements or all the elements are replaced with equivalent ones, and which are also encompassed in the scope of the invention.

### Embodiment 1

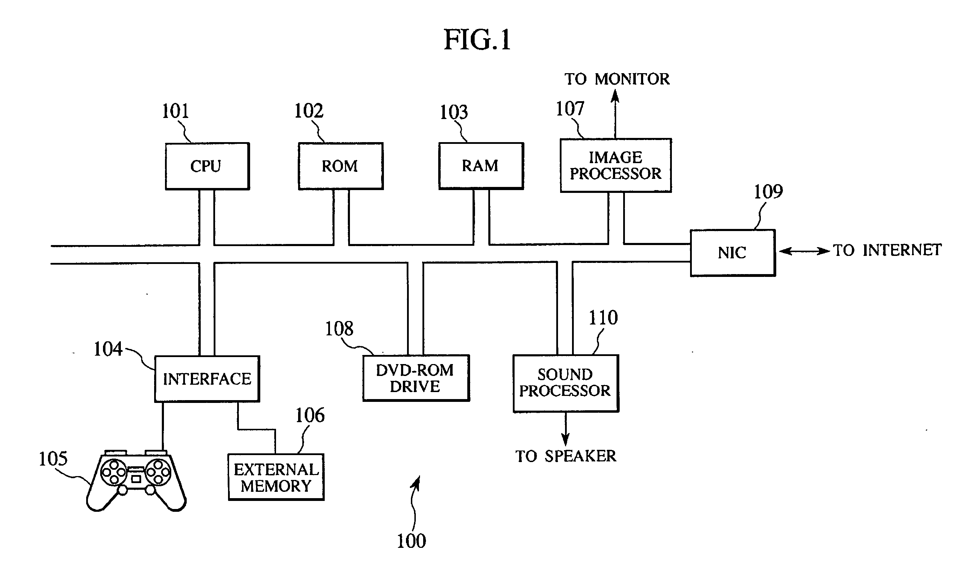

FIG. 1 is an exemplary diagram illustrating the schematic configuration of a typical information processing device that carries out the function of a game device of the present invention by executing a program. A description will be given hereinbelow referring to these diagrams.

An information processing device 100 comprises a CPU (Central Processing Unit) 101, a ROM 102, a RAM (Random Access Memory) 103, an interface 104, a controller 105, an external memory 106, an image processor 107, a DVD-ROM (Digital Versatile Disc ROM) drive 108, an NIC (Network Interface Card) 109, and a sound processor 110.

As a DVD-ROM storing a program and data for a game is loaded into the DVD-ROM drive 108 and the information processing device 100 is powered on, the program is executed to realize the game device of the embodiment.

The CPU 101 controls the general operation of the information processing device 100, and is connected to individual components to exchange a control signal and data therewith. Further, by using an ALU (Arithmetic Logic Unit) (not shown), the CPU 101 can perform arithmetic operations such as addition, subtraction, multiplication, division, etc., logical operations such as logical addition, logical multiplication, logical negotiation, etc., bit operations such as bit addition, bit multiplication, bit inversion, bit shift, bit rotation, etc., on a storage area, or a register (not shown) which can be accessed at a high speed. Furthermore, the CPU 101 itself may be designed to be able to rapidly perform saturate operations such as addition, subtraction, multiplication, division, etc., for handling multimedia processes, vector operations such as trigonometric function, etc., or may realize these with a coprocessor.

An IPL (Initial Program Loader) which is executed immediately after power-on is recorded in the ROM 102. As the IPL is executed, the program recorded in the DVD-ROM is read into the RAM 103 and is executed by the CPU 101. Further, the RAM 102 stores a program and various data for an operating system necessary for controlling the overall operation of the information processing device 100.

The RAM 103 is for temporarily storing data and programs, and retains the program and data read from the DVD-ROM, and other data needed for progressing a game and chat communication. Further, the CPU 101 performs processes such as securing a variable area in the RAM 103 to work the ALU directly upon the value stored in the variable to perform operations, or once storing the value stored in the RAM 103 in the register, performing operations on the register, and writing back the operation result to the memory, etc.

The controller 104 connected via the interface 105 receives an operation input which is made when a user plays a game such as a racing game.

In the case of a shooting game, etc., a gun type controller (not shown) is connected to the interface 104 and receives operation inputs from the user, and the position and orientation of the gun-type controller with respect to the monitor are estimated in the information processing device 100. The gun-type controller will be described in detail later.

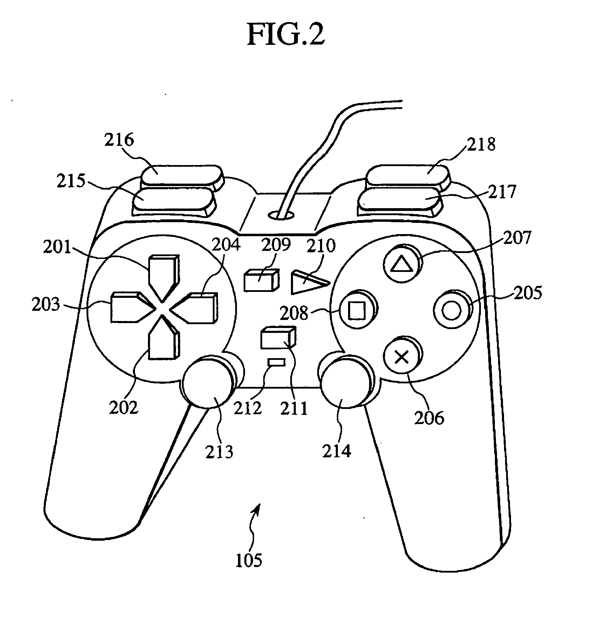

FIG. 2 is an explanatory diagram illustrating the outer appearance of the controller 105. A description will be given hereinbelow referring to these diagrams.

Arranged on the left side of the controller 105 are a ↑ button 201, a ↓ button 202, a ← button 203, and a → button 204, which are used for making operation inputs directing upward, downward, leftward, and rightward.

Arranged on the right side are a ○ button 205 used for making an affirmative operation input, a × button 206 used for making a cancel operation input, a Δ button 207 used for making an instruction input for menu display, etc., and a □ button 208 used for making an instruction input for other purposes.

At the center, an ANALOG button 211 for instructing start or stop of analog input and an indicator 212 for indicating whether an analog input is enabled or disabled are arranged, in addition to a SELECT button 209 and a START button 210.

Joysticks 213 and 214 for making instruction inputs associated with intensity in directions not limited to the upward, downward, leftward, and rightward directions are arranged on the lower center section.

Furthermore, an L1 button 215, an L2 button 216, an R1 button 217, and an R2 button 218, which can be used for various operation inputs, are arranged on the upper section.

The buttons 201 to 208 and 215 to 218 of the controller 105 are each equipped with a pressure sensor, so that which button pressed can be detected and the level of the pressure of the user's pressing operation can be obtained based on 256 levels of 0 to 255, in a case where analog input is enabled.

The joysticks 213 and 214 of the controller 105 are equipped with a strain gauge, so that the direction and the degree to which these are bent can be detected.

Returning to FIG. 1, the external memory 106 detachably connected via the interface 104 rewritably stores data indicating the play status (past performance, etc.) of a racing game, etc., data indicating the progress status of the game, data of chat communication logs (records), etc. As the user makes an instruction input via the controller 105, these data can adequately be recorded in the external memory 106.

The program for realizing the game and the image data and sound data accompanying the game are recorded in the DVD-ROM to be loaded into the DVD-ROM drive 108. Under the control of the CPU 101, the DVD-ROM drive 108 performs a process of reading from the DVD-ROM loaded therein to read a necessary program and data, and these are temporarily stored in the RAM 103 or the like.

The image processor 107 processes data read from the DVD-ROM by means of the CPU 101 and an image operation processor (not shown) the image processor 107 has, and then records the data in a frame memory (not shown) in the image processor 107. The image information recorded in the frame memory is converted to a video signal at a predetermined synchronous timing, which is in turn output to a monitor (not shown) connected to the image processor 107. Thereby, image displays of various types are available.

The image operation processor can enable fast execution of an overlay operation of a two-dimensional image, a transparent operation like α blending, and various kinds of saturate operations.

It is also possible to enable fast execution of an operation of rendering polygon information which is arranged in virtual three-dimensional space and to which various kinds of texture information are added, by a Z buffer scheme to acquire a rendered image with a downward view of a polygon toward a predetermined view point position, arranged in the virtual three-dimensional space, from the predetermined view point position.

Further, the CPU 101 and the image operation processor cooperate to be able to write a string of characters as a two-dimensional image in the frame memory or on each polygon surface according to font information which defines the shapes of characters.

The NIC 109 serves to connect the information processing device 100 to a computer communication network (not shown), such as the Internet. The NIC 109 includes an analog modem according to the 10 BASE-T/101 BASE-T standard which is used at the time of constructing a LAN (Local Area Network) or for connecting to the Internet using a telephone circuit, an ISDN (Integrated Services Digital Network) modem, an ADSL (Asymmetric Digital Subscriber Line) modem, a cable model for connecting to the Internet using a cable television circuit, or the like, and an interface (not shown) which intervenes between these modems and the CPU 101.

The sound processor 110 converts sound data read from the DVD-ROM to an analog sound signal, and outputs the sound signal from a speaker (not shown) connected thereto. Under the control of the CPU 101, the sound processor 110 generates sound effects and music data to be generated during progress of the game, and outputs sounds corresponding thereto from a speaker.

In a case where the sound data recorded on the DVD-ROM is MIDI data, the sound processor 110 refers to the sound source data included in the data, and converts the MIDI data to PCM data. Further, in a case where the sound data is compressed sound data of ADPCM format or Ogg Vorbis format, etc., the sound processor 110 expands the data, converting it to PCM data. The PCM data is D/A (Digital/Analog) converted at a timing corresponding to the sampling frequency of the data and output to the speaker, thereby enabling sound output.

In addition, the information processing device 100 may be configured to achieve the same functions as the ROM 102, the RAM 103, the external memory 106, and the DVD-ROM or the like which is to be loaded into the DVD-ROM drive 108 by using a large-capacity external storage device, such as a hard disk.

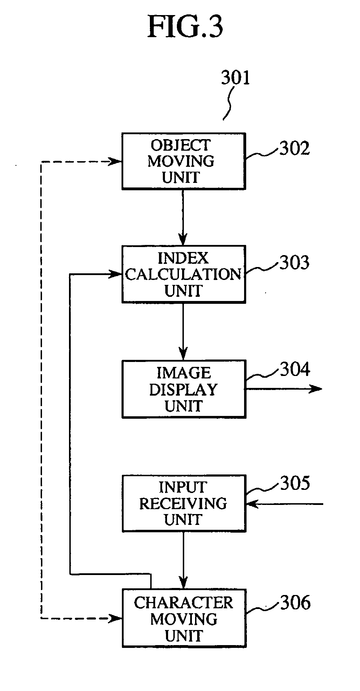

FIG. 3 is an exemplary diagram illustrating the schematic configuration of a game device according to one embodiment of the present invention. A description will be given hereinbelow referring to these diagrams.

The game device 301 of the present invention comprises an object moving unit 302, an index calculation unit 303, an image display unit 304, and input receiving unit 305, and a character moving unit 306.

The object moving unit 302 is responsible for setting and generating a map of a virtual world and controlling the movement of the objects that move in the virtual world, such as a floor of an elevator. The CPU 101 functions as the object moving unit 302 with the RAM 103 that stores movement speeds, etc.

The input receiving unit 305 receives from the player an instruction to move the character on the object surface or to move the character from an object to an object. The controller 105 functions as the input receiving unit 305. Furthermore, both the instruction for moving the character on an object surface and the instruction for moving the character from an object to an object may be expressed by using the arrow buttons to provide the instructions related to the movement direction of the character.

The index calculation unit 303 estimates whether or not movement from the object where the character is located to another object is possible based on the positional relationship of the two objects and the change in that relationship. The CPU 101 functions as the index calculation unit 303 with the RAM 103 that stores the object position, posture, movement speed, etc.

The image display unit 304 plays the role of displaying the directions in which movement has been estimated as possible and notifying the player accordingly. The image processor 107 functions as the image display unit 304, under the control of the CPU 101.

The character moving unit 306 moves a character in a virtual world based on an instruction inputted from the controller 105. The CPU 101 functions as the character moving unit 306 with the RAM 103 that stores the character position, posture, movement speed, object where the character is presently placed, etc.

As described above, the game realized on the game device 101 has an aspect of moving a character based on an instruction from a player from the surface of one object to the surface of another object in a virtual world where a plurality of objects is arranged and at least one of the plurality of objects moves, thereby making it possible to apply the present embodiment to various games such as action games, shooting games, role playing games, etc.

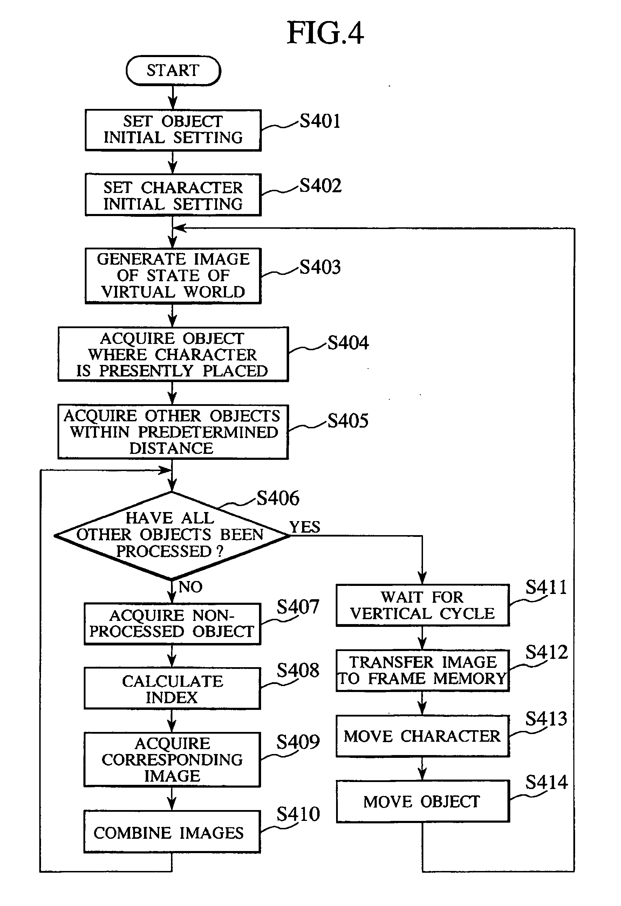

FIG. 4 is a flowchart showing the flow of control of a game control process performed by the game device of the present embodiment. A description will be given hereinbelow referring to these diagrams.

In the game device 301, first the object moving unit 302 sets initial parameters such as the position, posture, movement speed, etc., of each object (object to which the character can move) and each of the various obstacles (object to which the character cannot move) that are arranged in a virtual space (step S401). In the initial setup, a known automatic map generation technique, etc., may be applied.

Next, the character moving unit 306 sets initial parameters such as the position, posture, and movement speed of the character arranged in the virtual space and the object on which the character is presently placed, etc. (step S402).

Furthermore, the objects, obstacles, and character parameters are all either temporarily stored in the RAM 103 or stored on an external storage device such as a hard disk.

Possible objects where the character may be placed include a floor object of an elevator, a road surface object of a lift bridge, a walkway object such as a corridor or stairwell, a magic carpet object that flies in the air when boarded, a balloon or bird object that flies in the air when grabbed, etc. Possible obstacles include an elevator door or door, etc. Possible obstacles also include items that move when predetermined conditions are met (such as a door that opens when a predetermined floor is reached, a door that opens when the character pushes the door, etc.)

Then, the image display unit 304 generates on the RAM 103 an image of the state of the virtual world, from a viewpoint set in the virtual world, in the direction of a visual line set in the virtual world (step S403). This process is performed by the image processor 107 from the objects, obstacles, and character position and posture stored in the RAM 103 and the polygons and texture information assigned thereto.

The position of the viewpoint and the direction of the visual line may match the position of the eye and direction of the visual line of the character that the player is instructing to move, or may be an objective viewpoint viewing the character from the outside.

Next, the index calculation unit 303 refers to the RAM 103 and acquires the object where the character is presently placed (step S404). Then, the index calculation unit 303 refers to the RAM 103 and acquires other objects within a predetermined distance from the acquired object (step S405).

Next, the processing of step S406 to step S410 is repeated for each of the other objects acquired in step S404. That is, an assessment is made as to whether or not all of the other objects have been subjected to the processing (step S406) and, if not (step S406: No), one of the unprocessed other objects is selected (step S407), and the "index" is calculated based on information including the positional relationship and relative speed of the object where the character is placed and the selected other object, the presence of obstacles between the two, whether or not the obstacles are moving, etc. (step S408).

This "index" indicates the degree to which the movement will not fail if the attempt to move a character from the object where the character is presently place to the other object is presumed.

For this "index," the probability that the movement will succeed itself may be used, or something simpler may be used. For example, in a case where there is a door on an elevator, movement will always fail until the door opens since the door exists as an obstacle, even if the elevator is near a certain floor and an instruction input for moving to the corridor of that floor is presumed to exist. In the present invention, however, "degree" may be thought of in simpler terms.

For example, in a case where a character moves from the floor of an elevator to a certain floor, the degree to which the movement will not fail increases as the distance to that floor decreases, etc. In this case, the player can predict the direction in which the elevator door will open before the door opens, making it also possible to set the orientation of the character in that direction in advance and move the character quickly.

Specifically, items such as the following may be used as an "index":
(a) A value that makes it more difficult for movement to fail as the object where the character is placed and the other object draw near to each another. Simply, the distance between the two may be set as the "index," using an association where, for example, movement readily fails if the distance is long and readily succeeds if the distance is short. Stages may also be added to the distance.
(b) In addition to the above (a), a value that makes it easier for movement to succeed if the distance between the object where the character is placed and the other object is close, and easier for movement to fail if the distance is far. An association may be made where, for example, movement readily succeeds if the relative speed of the two is negative and readily fails if the relative speed of the two is positive. Stages may also be added to the distance.
(c) Whether or not the object where the character is placed will be in a section of a preset path (typically, the vertical path in the case of an elevator) that is near the other object when the object where the character is placed moves. In a case where the other object does not move (typically, the hallway of a fixed floor), the "index" can be calculated using only the position of the object where the character is placed since the locations of nearby sections of other objects in the path can be calculated in advance at the time of map generation.
(d) Something that generates player instruction inputs using random numbers, conducts simulation tests, and determines the "index" from the movement success rate and failure rate. This method simulates on the computer at high speed the operation of the player from the current position, until a predetermined time period has elapsed.

Furthermore, the image display unit 304 acquires an image associated with the acquired "index" (step S409), writes the acquired image to a location associated with the direction from the object where the character is placed to the other object in the RAM 103 (step S410), and returns to step S406.

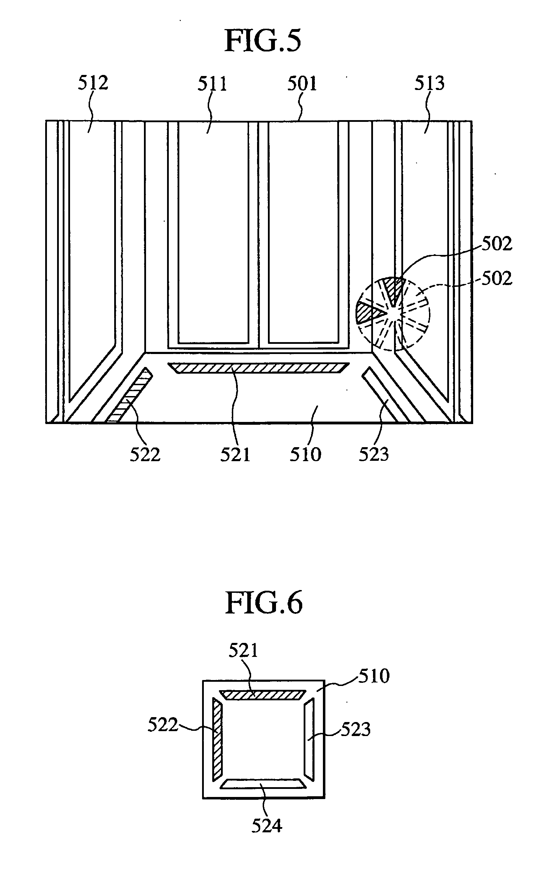

The direction from the object where the character is placed to the other object may be calculated from the positional relationship of these objects that is stored in the RAM 103. FIG. 5 is an explanatory diagram that shows a display example of an image generated by such a repeated process.

In the display example, an image showing in which directions the character can proceed (in the near future) is displayed on the screen.

In this display example, a circle divided into eight sectors 502 is displayed in the bottom right corner of the screen of a screen 501. Of the sectors 502, those arranged in the screen upward direction and the screen leftward direction appear highlighted (shaded in the figure). Further, the other sectors 502 appear transparent with only outer frames (with dotted lines in the figure).

Here, the two sectors 502 indicate that the character "can possibly move forward" and "can possibly move leftward," respectively.

The image of highlighted sectors is associated with "an index indicating that movement in these directions may be possible," and the image of non-highlighted sectors is associated with "an index indicating that movement in these directions may not be possible."

In a case where the character can be moved horizontally forward, backward, leftward, and righting using arrow keys 201 to 204, four sectors may be used. Further, because the character can be moved in any arbitrary horizontal direction if a joystick 213 is used, a graphic such as a meter indicating directions in further detail may be employed.

In addition, in the present display example, the paper of the elevator as viewed from the viewpoint of the character is displayed on the screen 501. A floor 510 of the elevator, a door 511 on the elevator front surface, a door 512 on the left, and a door 513 on the right are also displayed.

On the floor 510, strip-shaped light emitting areas 521 to 523 are displayed on the peripheral border of the bottom of each door 511 to 513.

FIG. 6 is an explanatory diagram illustrating the overall floor object of an elevator.

This figure shows the state of the floor 510 of the elevator as viewed from above. The floor 510 of the elevator is square in shape, and a door exists in each of the four directions. That is, in the display example shown in FIG. 5, a door not shown also exists since that door is on the rear side.

The light emitting areas 521 to 524 are prepared correspondingly to each door. The light emitting areas 521 to 524 forewarn which doors will open and in which directions movement may be possible upon arrival to the next floor.

Since, as described above, it is estimated that, forward movement and leftward movement seem possible at present, the system is set so that the light emitting areas 521 and 522 emit light and the light emitting areas 523 and 524 remain dark.

In regards to the details of light emission of the light emitting areas 521 to 524, a mode such as the following may also be employed. That is, the possibility that movement will succeed increases as the distance between the object where the character is presently placed and the other object decreases, and increases if the distance exhibits a decreasing trend since this means the other object is drawing near. This is indicated by an increasingly pronounced display as the distance decreases and as the distance decreasing trend becomes more evident. For example, as the distance decreases, the image of the light emitting area 521 to 524 associated with that direction appears brighter. Or, the color may be changed so that the blueness increases if the distance exhibits an increasing trend, and the redness increases if the distance exhibits a decreasing or holding trend (not much change).

In addition, it is also possible to generate an image corresponding to the index by highlighting or changing the color or brightness of those doors (obstacles) 512 to 514 that are positioned in directions in which movement may be possible.

As described above, the player can be forewarned of the directions in which movement may be possible by combining an image of objects and obstacles in a virtual world with an image associated with an index (including an image that changes in color or brightness only).

On the other hand, when the processing of all of the other objects acquired is completed (step S406: Yes), the mode changes to standby mode until a vertical synchronization interrupt occurs (step S411). In standby mode, other processing may be appropriately and routinely executed.

When a vertical synchronization interrupt occurs, the image information generated in the RAM 103 is transferred to frame memory (step S412) and displayed on the monitor.

Then, the operation status of the buttons and keys of the controller 105 is checked and, by processing associated with the operation status, the status of the character is changed, i.e., the character is moved on the surface of the object where the character is presently placed, the character is moved to the surface of another object, or movement of the character to the surface of another object fails, etc. (step S413). For example, when an operation is performed using the arrow keys 201 to 204 or the joystick 213, an attempt is made to move the character in that direction.

For example, in a case where the character changes orientation or position inside an elevator and the elevator arrives at a certain floor, a mode where the character moves to the corridor, or fails to move and stays in the elevator if the door does not open, or moves but plunges downward causing the game to end if there is no door or floor in that direction, is conceivable.

Next, the object moving unit 302, based on parameters stored in the RAM 103, moves the objects and obstacles that move, updates the parameters stored in the RAM 103 (step S414), and returns to step S403.

Furthermore, when the amount of movement of the character, objects, and obstacles is made to correspond to a minute time period corresponding to the time interval of vertical interrupt synchronization (typically one second of 60 minutes), the movement generates the sensation of real-time for the player.

Further, with regard to image generation for screen display as well, while the above embodiment generates an image that indicates the state of the virtual world and subsequently combines that image with an image associated with an index, a procedure where an image indicating the state of the virtual world is generated after adding polygons associated with an index to a polygon group that indicates the virtual world may also be adopted.

In addition, the processing of step S404 to step S410 may be performed only in a case where a character is arranged on a part of an object (a floor of an elevator, etc.), and the display of the directions in which movement may be possible may be omitted in a case where the character is located on an object that is not a part of an object (the corridor of each floor, etc.).

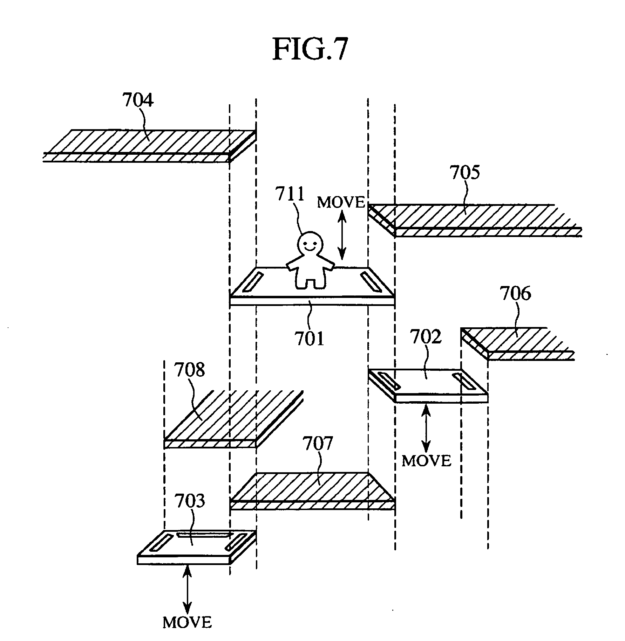

FIG. 7 is an explanatory diagram illustrating a state of a case where a plurality of objects move and a plurality of objects are fixed.

In this figure, the objects that move are drawn as white and the objects that do not move are drawn as shaded.

An object 701 where a character 711 is presently located is above an object 707, moving vertically, rendering movement to the vicinity of an object 704 and an object 705 possible, and movement to the vicinity of another moving object 702 also possible.

The object 702 also moves vertically, and may move to the vicinity of the object 706 and the object 707. The object 703 may move near objects 707 and 708.

That is, a case where three elevators exist is synthesized.

In a case where the heights of two objects are virtually the same and the objects are adjacent to each other, the player can move the character 711 between the two objects. Thus, when the character is moved rightward, leftward, and rearward in correspondence to the vertical movement of the objects 701, 702 and 703, the character can also pass over all objects shown in the present illustration.

Further, light emitting areas that indicate the degree to which leftward and rightward movement is possible are respectively provided on the objects 701 and 702, and a light emitting area that indicates the degree to which rearward movement is possible is further provided on the object 703, similar to the case of FIG. 6.

The object 701 and the object 702 move independently up and down, enabling the character 711 to move between the object 701 and the object 702 in a case where the heights, by chance, become virtually the same.

With regard to whether or not movement is possible between an object of a fixed height and an object that moves, it is also possible to determine in advance whether or not a light emitting area is to emit light based only on the position (height) of the object that moves. However, in the case of two moving objects, at times it is difficult to determine in advance the locations where the two will draw near to each other. Whether or not movement is possible is therefore preferably dynamically determined. Thus, whether or not the light emitting area indicating whether or not movement is possible between the object 701 and the object 702 is to emit light is dynamically determined by the difference in the present heights of the two objects.

Further, a light emitting area may be configured to emit brighter light as the difference between the heights of the object and any of the other objects decreases, and to emit dimmer light as the heights of the object and all of the other objects become separated by distance. Thus, by viewing the brightness of the light emitting areas, the player can easily learn whether or not movement of the character 711 will succeed (if movement fails, the object falls or collides with an object, causing the game to end).

The objects 701 and 702 are provided with light emitting areas on the left and right only since, from these objects, only crossing over to an object on the left or right is possible. The object 703, however, is provided with light emitting areas in three directions since movement in the rearward direction is also possible. When the character 711 is moved in a direction not provided with an emitting light area, the character falls and the game ends. In this manner, a mode may also be adopted where the directions in which movement is possible are extracted in advance from a map and light emitting areas are provided in those directions only.

### Embodiment 2

While the above-described embodiment employs an index indicating the degree to which movement will succeed or fail and appropriately selects and displays an image according to that index in a case where an attempt to move a character is presumed, the present embodiment simplifies this even further.

That is, in the present embodiment, the game device 301 is configured to comprise an estimation unit in place of the index calculation unit 303.

Then, in a case where the object where the character is presently placed (the floor 510 of an elevator and the object 701 in the above illustrations) and another object each presumably move based on current parameters stored in the RAM 103, the estimation unit checks if the object where the character is presently placed will be near the other object within a predetermined time period from the present.

For example, in the embodiment of FIG. 7, because the objects 701 to 703 each repeatedly move up and down, it is possible to predict from the speed of movement and the present position whether or not each of the objects will become aligned in height with another object within a predetermined time period.

Then, with the direction of an object that is expected to draw near set as "a direction in which the character can move within a predetermined time period from the present," an image indicating that direction (an image of the light emitting areas 521 to 524 emitting light in the above illustration) is displayed.

The present embodiment estimates "whether or not movement will be possible in that direction in the near future" as the "degree to which character movement is possible." The parameter that indicates the degree of closeness of the "near future" is the above "predetermined time period," and the length is preferably appropriately changed according to the speed of movement of the object, etc.

Further, the image indicating a direction may also be changed according to the length of the time period of "how much time is to elapse from the present before movement becomes possible." For example, in a case where the light emitting areas 521 to 524 emit light, because the time required from the present until movement becomes possible decreases as a corridor of a floor to which movement is possible draws near, the light emitted is brightened accordingly, etc.

The present invention claims the priority based on Japanese Patent Application No. 2005-097511 the entire contents of which are incorporated herein by reference.

### Industrial Applicability

As described above, the present invention can provide a game device 301 and a game method suitable for estimating a position and orientation of a photographing unit by photographing a marker displayed on a screen of a display device using the photographing unit, and a program that realizes these on a computer.

## Claims

1. A game device (301) that moves a character from the surface of an object to the surface of another object in a virtual world in which a plurality of objects is arranged and at least one of said plurality of objects moves, said game device (301) comprising:
an input receiving unit (305) that receives an instruction input for moving said character on the surface of an object where said character is presently placed or for moving said character to the surface of another object;
an index calculation unit (303) that calculates an index indicating the degree to which said movement will not fail in a case where the existence of an instruction input for moving said character from the surface of an object where said character is presently placed to the surface of another object is presumed;
an image display unit (304) that displays an image associated with said calculated index in a location associated with the direction of said other object; and
a character moving unit (306) that moves said character on the surface of an object where said character is presently placed, or that moves said character to the surface of another object, or that fails to move said character to the surface of another object, based on said received instruction input.

2. A game device (301) that moves a character from the surface of an object to the surface of another object in a virtual world in which a plurality of objects is arranged and at least one of said plurality of objects moves, said game device (301) comprising:
an input receiving unit (305) that receives an instruction input for moving said character on the surface of an object where said character is presently placed or for moving said character to the surface of another object;
an estimation unit that estimates whether or not movement from the surface of an object where said character is presently placed to the surface of another object within a predetermined time period from the present will be possible;
an image display unit (304) that, in a case where said estimation unit has assessed that movement will be possible, displays an image informing a player that movement will be possible in a location associated with the direction of said other object; and
a character moving unit (306) that moves said character on the surface of an object where said character is presently placed, or that moves said character to the surface of another object, or that fails to move said character to the surface of another object, based on said received instruction input.

3. The game device (301) according to claim 1, further comprising an object moving unit that moves a first object of said plurality of objects between the vicinity of a second object and the vicinity of a third object in said virtual world.

4. The game device (301) according to claim 1, wherein said image display unit (304) combines and displays an image associated with said calculated index with the area of a plurality of areas assigned to the peripheral borders of the surface of an object where said character is presently placed that is arranged in the direction of said other object.

5. The game device (301) according to claim 1, further comprising an object moving unit that moves a first object and/or a second object of said plurality of objects so that said first object moves to the vicinity and to locations not in the vicinity of said second object in said virtual world.

6. The game device (301) according to claim 1, wherein the index calculation unit (303) calculates an index indicating the degree to which said movement will not fail from the distance between an object where said character is presently placed and another object, and the increasing or decreasing trend of said distance.

7. A game control method that controls a game that moves a character from the surface of an object to the surface of another object in a virtual world in which a plurality of objects is arranged and at least one of said plurality of objects moves, said game control method comprising:
an input receiving step of receiving an instruction input for moving said character on the surface of an object where said character is presently placed or for moving said character to the surface of another object;
an index calculation step of calculating an index indicating the degree to which said movement will not fail in a case where the existence of an instruction input for moving said character from the surface of an object where said character is presently placed to the surface of another object is presumed;
an image display step of displaying an image associated with said calculated index in a location associated with the direction of said other object; and
a character moving step of moving said character on the surface of an object where said character is presently placed, or of moving said character to the surface of another object, or of failing to move said character to the surface of another object, based on said received instruction input.

8. A control method that controls a game that moves a character from the surface of an object to the surface of another object in a virtual world in which a plurality of objects is arranged and at least one of said plurality of objects moves, said control method comprising:
an input receiving step of receiving an instruction input for moving said character on the surface of an object where said character is presently placed or for moving said character to the surface of another object;
an estimation step of estimating whether or not movement from the surface of an object where said character is presently placed to the surface of another object within a predetermined time period from the present will be possible;
an image display step of displaying in a case where said estimation step has assessed that movement will be possible an image informing a player that movement will be possible in a location associated with the direction of said other object; and
a character moving step of moving said character on the surface of an object where said character is presently placed, or of moving said character to the surface of another object, or of failing to move said character to the surface of another object, based on said received instruction input.

9. A computer-readable information recording program storing a program for controlling a computer to function as a game device (301) that moves a character from the surface of an object to the surface of another object in a virtual world in which a plurality of objects is arranged and at least one of said plurality of objects moves, wherein said program controls said computer to function as:
an input receiving unit (305) that receives an instruction input for moving said character on the surface of an object where said character is presently placed or for moving said character to the surface of another object;
an index calculation unit (303) that calculates an index indicating the degree to which said movement will not fail in a case where the existence of an instruction input for moving said character from the surface of an object where said character is presently placed to the surface of another object is presumed;
an image display unit (304) that displays an image associated with said calculated index in a location associated with the direction of said other object; and
a character moving unit (306) that moves said character on the surface of an object where said character is presently placed, or that moves said character to the surface of another object, or that fails to move said character to the surface of another object, based on said received instruction input.

10. A computer-readable information recording program storing a program for controlling a computer to function as a game device (301) that moves a character from the surface of an object to the surface of another object in a virtual world in which a plurality of objects is arranged and at least one of said plurality of objects moves, wherein said program controls said computer to function as:
an input receiving unit (305) that receives an instruction input for moving said character on the surface of an object where said character is presently placed or for moving said character to the surface of another object;
an estimation unit that estimates whether or not movement from the surface of an object where said character is presently placed to the surface of another object within a predetermined time period from the present will be possible;
an image display unit (304) that, in a case where said estimation unit has assessed that movement will be possible, displays an image informing a player that movement will be possible in a location associated with the direction of said other object; and
a character moving unit (306) that moves said character on the surface of an object where said character is presently placed, or that moves said character to the surface of another object, or that fails to move said character to the surface of another object, based on said received instruction input.

11. A computer-readable information recording program storing a program for controlling a computer to function as a game device (301) that moves a character from the surface of an object to the surface of another object in a virtual world in which a plurality of objects is arranged and at least one of said plurality of objects moves, wherein said program controls said computer to function as:
an input receiving unit (305) that receives an instruction input for moving said character on the surface of an object where said character is presently placed or for moving said character to the surface of another object;
an index calculation unit (303) that calculates an index indicating the degree to which said movement will not fail in a case where the existence of an instruction input for moving said character from the surface of an object where said character is presently placed to the surface of another object is presumed;
an image display unit (304) that displays an image associated with said calculated index in a location associated with the direction of said other object; and
a character moving unit (306) that moves said character on the surface of an object where said character is presently placed, or that moves said character to the surface of another object, or that fails to move said character to the surface of another object, based on said received instruction input.

12. A computer-readable information recording program storing a program for controlling a computer to function as a game device (301) that moves a character from the surface of an object to the surface of another object in a virtual world in which a plurality of objects is arranged and at least one of said plurality of objects moves, wherein said program controls said computer to function as:
an input receiving unit (305) that receives an instruction input for moving said character on the surface of an object where said character is presently placed or for moving said character to the surface of another object;
an estimation unit that estimates whether or not movement from the surface of an object where said character is presently placed to the surface of another object within a predetermined time period from the present will be possible;
an image display unit (304) that, in a case where said estimation unit has assessed that movement will be possible, displays an image informing a player that movement will be possible in a location associated with the direction of said other object; and
a character moving unit (306) that moves said character on the surface of an object where said character is presently placed, or that moves said character to the surface of another object, or that fails to move said character to the surface of another object, based on said received instruction input.
